# EUROPEAN PATENT APPLICATION

(11) **EP 2 677 393 A1**
(43) Date of publication of application: **25.12.2013**
(21) Application number: 13172214.2
(22) Date of filing: 17.06.2013
(51) Int. Cl.: G06F 1/32

(54) **Wake-up method, hot swap method, and device based on high speed inter-chip HSIC interface**

(30) Priority: 21.06.2012 CN 201210208398
(71) Applicant: Huawei Device Co., Ltd., Longgang District Shenzhen Guangdong 518129 (CN)
(72) Inventor: Gui, Yonglin, 518129 Shenzhen (CN); Zhao, Yang, 518129 Shenzhen (CN); Zhu, Guangze, 518129 Shenzhen (CN)
(74) Representative: Pfenning, Meinig & Partner GbR

(57) **Abstract**

The embodiments of the present invention provide a wakeup method, a hot swap method, and a device based on high speed inter-chip interface HSIC. A method includes: learning, by a host, that a peripheral device connected to the host through a high speed inter-chip HSIC bus is in an idle state; the host is in a dormant state; receiving, by the host from a signal line connected to the peripheral device, an interrupt signal sent by the peripheral device; and the host is woken up from the dormant state according to the interrupt signal. The wakeup and hot swap of the host and the peripheral device based on an HSIC bus are implemented, and the electric energy of the device is saved.

## Description

### FIELD OF THE INVENTION

The present invention relates to information technologies, and in particular, to a wakeup method, a hot swap method, and a device based on high speed inter-chip HSIC interface.

### BACKGROUND OF THE INVENTION

Currently, a high speed inter-chip (High Speed Inter-Chip, HSIC) interface adopts the inter-chip connectivity (Inter-Chip Connectivity, ICC) technology, which enables short-distance transmission of USB 2.0 while keeping the software compatibility with USB 2.0 like connections.

In the prior art, a host chip and a peripheral chip that both use an HSIC interface are welded on one board. The two chips are powered up at the same time and powered down at the same time, which results in the high power consumption of a device.

### SUMMARY OF THE INVENTION

Embodiments of the present invention provide a wakeup method, a hot swap method, and a device based on high speed inter-chip HSIC interface, which save electric energy of a device.

In one aspect, an embodiment of the present invention provides a wakeup method based on high speed inter-chip HSIC interface, including:
learning, by a host, that a peripheral device connected to the host through a high speed inter-chip HSIC bus is in an idle state;
staying, by the host, in a dormant state;
receiving, by the host from a signal line connected to the peripheral device, an interrupt signal sent by the peripheral device; and
the host is woken up from the dormant state according to the interrupt signal.

Another embodiment of the present invention provides a wakeup method based on high speed inter-chip HSIC interface, including:
receiving, by a peripheral device connected to a host through a high speed inter-chip HSIC bus, an operation instruction of a user; and
sending, by the peripheral device, an interrupt signal to the host through a signal line connected to the host so that the host is woken up from a dormant state.

In another aspect, an embodiment of the present invention provides a hot swap method based on high speed inter-chip HSIC interface, including:
when a host learns that a peripheral device connected to the host through a high speed inter-chip HSIC bus is in an idle state or when a host needs to control, according to a service requirement, a peripheral device to be powered down,
controlling, by the host, the peripheral device to be powered down;
controlling, by the host, the HSIC bus to enter an initial state to wait for power-up of the peripheral device; and
controlling, by the host, the peripheral device to be powered up.

In still another aspect, an embodiment of the present invention provides a host, including:
a high speed inter-chip HSIC interface, connected to a peripheral device through an HSIC bus;
a level change interface, connected to the peripheral device through a signal line and configured to receive an interrupt signal sent by the peripheral device; and
a processor, configured to: when learning that the peripheral device is in an idle state, control the host to enter a dormant state; and when the level change interface receives, from the signal line, the interrupt signal sent by the peripheral device, control, according to the interrupt signal, the host to wake up from the dormant state.

An embodiment of the present invention provides a peripheral device, including:
a high speed inter-chip HSIC interface, connected to a host through an HSIC bus;
a level change interface, connected to the host through a signal line and configured to generate an interrupt signal under control of a processor and send the interrupt signal to the peripheral device through the signal line; and
the processor, configured to receive an operation instruction of a user and control the level change interface to generate the interrupt signal.

In still another aspect, an embodiment of the present invention provides a host, including:
a high speed inter-chip HSIC interface, connected to a peripheral device through an HSIC bus; and
a processor, configured to: when learning that the peripheral device is in an idle state or needing to control, according to a service requirement, the peripheral device to be powered down, control the peripheral device to be powered down; control the HSIC bus to enter an initial state to wait for power-up of the peripheral device, and control the peripheral device to be powered up.

An embodiment of the present invention provides a terminal, including a host and a peripheral device, where the host and the peripheral device both include a high speed inter-chip HSIC interface, where the HSIC interface of the host and the HSIC interface of the peripheral device are connected through an HSIC bus, and the host and the peripheral device both include an interface capable of generating level changes, and the level change interface of the host and the level change interface of the peripheral device are connected through a signal line.

According to the wakeup method and device based on high speed inter-chip HSIC interface provided in the embodiments of the present invention, when a host learns that a peripheral device connected to the host through an HSIC bus is in an idle state, the host in a dormant state may be woken up from a dormant state according to an interrupt signal after receiving, from a signal line connected to the peripheral device, the interrupt signal sent by the peripheral device. In this way, HSIC bus-based wakeup of the host and the peripheral device is implemented, and electric energy of the device is saved.

According to the hot swap method and device based on high speed inter-chip HSIC interface provided in the embodiments of the present invention, when a host learns that a peripheral device connected to the host through an HSIC bus is in an idle state or when the host needs to control, according to a service requirement, the peripheral device to be powered down, the host may control the peripheral device to be powered down, thereby implementing the hot swap of the peripheral device and saving electric energy of the device.

### BRIEF DESCRIPTION OF THE DRAWINGS

To describe the technical solutions in the embodiments of the present invention or the prior art more clearly, the following briefly describes the accompanying drawings required for describing the embodiments of the present invention or the prior art. Apparently, the accompanying drawings in the following descriptions show some embodiments of the present invention, and persons of ordinary skill in the art may still derive other drawings from these accompanying drawings without any creative effort.

FIG. 1 is a flowchart of a wakeup method based on high speed inter-chip interface HSIC according to an embodiment of the present invention;

FIG. 2 is a flowchart of a wakeup method based on high speed inter-chip interface HSIC according to another embodiment of the present invention;

FIG. 3 is a flowchart of a wakeup method based on high speed inter-chip interface HSIC according to another embodiment of the present invention;

FIG. 4 is a flowchart of a hot swap method based on high speed inter-chip interface HSIC according to an embodiment of the present invention;

FIG. 5 is a flowchart of a hot swap method based on high speed inter-chip interface HSIC according to another embodiment of the present invention;

FIG. 6 is a schematic structure diagram of a host according to an embodiment of the present invention;

FIG. 7 is a schematic structure diagram of a peripheral device according to an embodiment of the present invention;

FIG. 8 is a schematic structure diagram of a host according to another embodiment of the present invention; and

FIG. 9 is a schematic structure diagram of a wireless terminal according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

A host involved in an embodiment of the present invention may be a central processing unit (Central Processing Unit, CPU) on terminals such as a personal computer, a mobile phone, a PAD, a wireless router, or a universal serial bus (Universal Serial BUS, USB) modem. A peripheral device may be a peripheral chip such as a wireless fidelity (Wireless Fidelity, WiFi) chip module, a Bluetooth module, or a camera module.

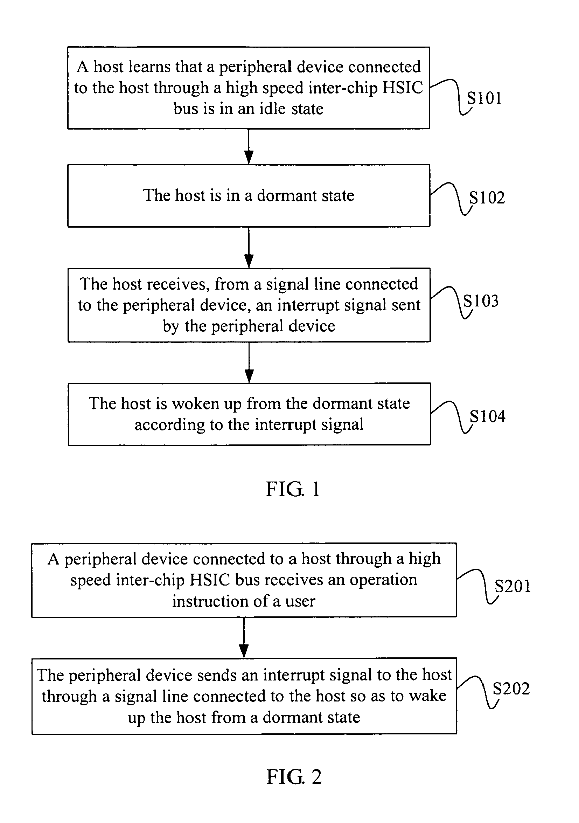

FIG. 1 is a flowchart of a wakeup method based on high speed inter-chip HSIC interface provided in an embodiment of the present invention. As shown in FIG. 1, the method includes:

S101. A host learns that a peripheral device connected to the host through a high speed inter-chip (High Speed Inter-Chip, HSIC) bus is in an idle state.

S102. The host stays in a dormant state.

S103. The host receives, from a signal line connected to the peripheral device, an interrupt signal sent by the peripheral device.

S104. The host is woken up from the dormant state according to the interrupt signal.

The host and the peripheral device involved in this embodiment may both include a High Speed Inter-Chip (abbreviated as HSIC) interface. The HSIC interface of the host and the HSIC interface of the peripheral device are connected through an HSIC bus. The host and the peripheral device may also both include an interface that is capable of generating level changes (such as a General Purpose Input Output (abbreviated as GPIO) interface or an interrupt interface). The level change interface of the host and the level change interface of the peripheral device may be connected through the signal line. The signal line may be formed by a signal line for two-way communication between the host and the peripheral device or formed by a signal line for communication from the host to the peripheral device and a signal line for communication from the peripheral device to the host. The signal line may be a general purpose input/output (General Purpose Input Output, GPIO) signal line or other signal lines that are capable of generating level changes.

Where the peripheral device is in the idle state may refer to a scenario where the peripheral device is not used by a user and is waiting for a user or a scenario where the usage rate of the peripheral device is lower than a threshold.

The host may learn, by detection, that the peripheral device is in the idle state; or when the peripheral device is in the idle state, a message indicating that it is in the idle state may be reported to the host.

After the host learns that the peripheral device is in the idle state, the host may suspend (suspend) the HSIC bus so that the HSIC bus stops data transmission, and then, the host may enter the dormant state. The host may have different dormant states. For example, in an implementation scenario, the host may be in a power-down state, no software is running, and a memory is in a self-refresh state; in another implementation scenario, the host may be in a slow clock state. The embodiment of the present invention does not limit how the host is in the dormant state.

After the peripheral device stays in the idle state, the peripheral device may enter the dormant state. As a feasible implementation manner, after the host learns that the peripheral device is the idle state, the host may control the peripheral device to enter the dormant state. For example, the host may control the peripheral device to enter the dormant state by using a software command, or control the peripheral device to enter the dormant state by using one of various existing methods. As another feasible implementation manner, the peripheral device may enter the dormant state after detecting that the HSIC bus is suspended. The peripheral device may have different dormant states. For example, the peripheral device may be in a low power consumption state where the peripheral device is in energy saving mode but is capable of responding to a user operation. For example, when a WiFi chip of a peripheral device is in the idle state, power of the device is reduced, a signaling frame is prolonged, and the device can respond to a user access.

When the host is in the dormant state, the peripheral device may send an interrupt signal to the host through a signal line connected to the host, where the interrupt signal may be a high level signal or a low level signal. After the host receives the interrupt signal sent by the peripheral device, the host may be woken up from the dormant state. The host is in normal working mode after wakeup.

After the host is woken up, the host may resume (resume) the HSIC bus from a suspended state to a normal working state, so that the HSIC bus resumes data transmission.

In an implementation scenario where the peripheral device is in the dormant state, after the host resumes the HSIC bus from the suspended state to the normal working state, the HSIC bus resumes data transmission and the peripheral device may be woken up from the dormant state. Specifically, after the HSIC bus resumes data transmission, the peripheral device may be woken up from the dormant state by using a resume protocol in HSIC protocols.

As a feasible implementation manner, after the host suspends the HSIC bus, the host may save the current state of an HSIC controller, and then, the host enters the dormant state. In the implementation scenario, after the host is woken up by the interrupt signal sent by the peripheral device, the host may resume the HSIC controller according to the saved HSIC state, and then, the host resumes the suspended HSIC bus to the normal working state.

As another feasible implementation manner, after the host suspends the HSIC bus, the host may save the current state of an HSIC controller and control the HSIC bus to be powered down, and then the host enters the dormant state. In the implementation scenario, after the host is woken up according to the interrupt signal sent by the peripheral device, the host may first control the HSIC bus to be powered up and then resume the HSIC controller according to the saved HSIC state, and then, the host resumes the suspended HSIC bus to the normal working state.

After the HSIC bus is resumed to the normal working state, the peripheral device may enter the normal working state from the dormant state.

According to the wakeup method based on high speed inter-chip HSIC interface provided in this embodiment, when the host learns that the peripheral device connected to the host through an HSIC bus is in an idle state, the host in a dormant state may be woken up from the dormant state according to an interrupt signal after receiving, from a signal line connected to the peripheral device, the interrupt signal sent by the peripheral device. In this way, HSIC bus-based wakeup of the host and the peripheral device is implemented, and electric energy of a device is saved.

FIG. 2 is a flowchart of a wakeup method based on high speed inter-chip interface HSIC provided in another embodiment of the present invention. As shown in FIG. 2, the method includes:

S201. A peripheral device connected to a host through a high speed inter-chip HSIC bus receives an operation instruction of a user.

S202. The peripheral device sends an interrupt signal to the host through a signal line connected to the host so as to wake up the host from a dormant state.

After the peripheral device receives the operation instruction of the user, the peripheral device may send the interrupt signal to the host through the signal line connected to the host, thereby implementing HSIC bus-based wakeup of the host in the dormant state.

It should be noted that the peripheral device may receive the operation instruction of the user in a scenario where the peripheral device is in the dormant state or in a scenario where the peripheral device is in a normal working state. That is, the present invention does not limit the state of the peripheral device when it sends an interrupt signal to the host.

In an implementation scenario, when the peripheral device is in an idle state, for example, the peripheral device is not used by a user and is waiting for the user, or the usage rate of the peripheral device is lower than a specific threshold. The peripheral device may enter the dormant state under the control of the host; or, the peripheral device may enter the dormant state when detecting that the HSIC bus connected to the host is suspended.

In a scenario where the peripheral device is in the dormant state, after the host is woken up by the interrupt signal sent by the peripheral device, the host may resume the HSIC bus from a suspended state to a normal working state. The peripheral device may be woken up from the dormant state after the HSIC bus is resumed from the suspended state to the normal working state.

According to the wakeup method based on high speed inter-chip HSIC interface provided in this embodiment, when receiving the operation instruction of a user, the peripheral device connected to a host through a high speed inter-chip HSIC bus may send an interrupt signal to the host through a signal line connected to the host, so as to wake up the host from a dormant state. In this way, HSIC bus-based wakeup of the host and the peripheral device is implemented, and electric energy of the peripheral device is saved.

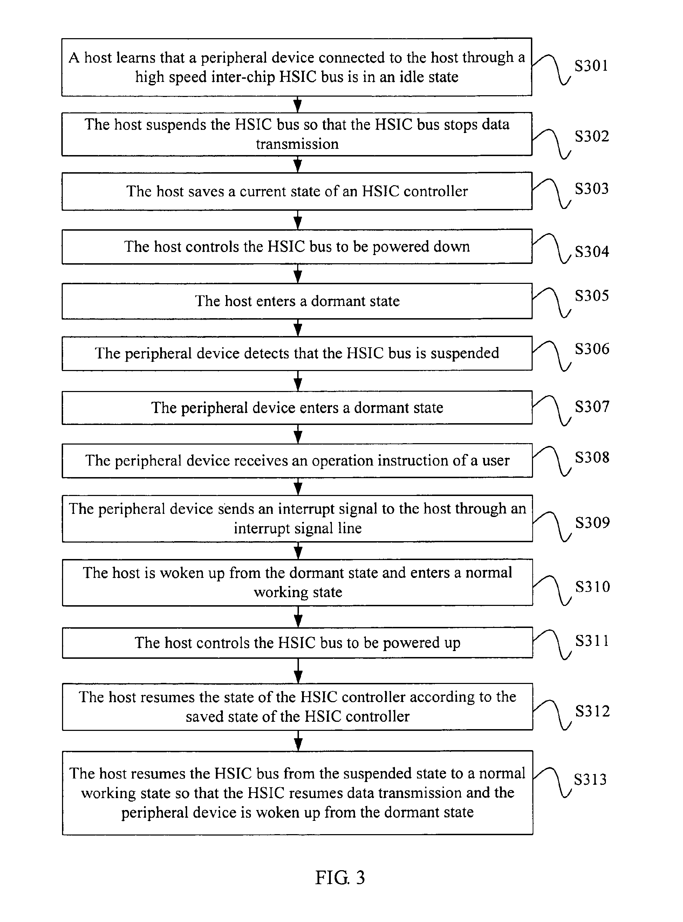

FIG. 3 is a flowchart of a wakeup method based on high speed inter-chip HSIC interface provided in still another embodiment of the present invention. As shown in FIG. 3, this embodiment provides an implementation scenario where a host and a peripheral device enter a dormant state and are woken up based on an HSIC bus, and the method includes:

S301. A host learns that a peripheral device connected to the host through a high speed inter-chip (High Speed Inter-Chip, HSIC) bus is in an idle state.

S302. The host suspends the HSIC bus, so that the HSIC bus stops data transmission.

S303. The host saves a current state of an HSIC controller.

S304. The host controls the HSIC bus to be powered down.

The HSIC controller generally performs operations such as HSIC protocol processing. The host saves the current state of the HSIC controller, so that the host can resume the current state of the HSIC controller after the HSIC bus is powered up.

S305. The host enters a dormant state.

S306. The peripheral device detects that the HSIC bus is suspended.

S307. The peripheral device enters a dormant state.

For example, an access point (Access Point, AP) module of a WiFi module that is a peripheral device may enter the dormant state to wait for user's access, so as to save the power consumption of the WiFi module.

S308. The peripheral device receives an operation instruction of a user.

S309. The peripheral device sends an interrupt signal to the host through a signal line.

After the host enters the dormant state, the host is capable of responding to an interrupt signal generated by a level change on the signal line between the peripheral device and the host.

When a user operates the peripheral device, for example, a user accesses the WiFi chip that is a peripheral device, the peripheral device may send an interrupt signal to the host through a signal line to wake up the host.

S310. The host is woken up from the dormant state.

S311. The host controls the HSIC bus to be powered up.

S312. The host resumes the state of the HSIC controller according to the saved state of the HSIC controller.

S313. The host resumes the HSIC bus from the suspended state to a normal working state, so that the HSIC resumes data transmission and the peripheral device is woken up from the dormant state.

The above steps S304 and S311 are optional.

According to the wakeup method based on high speed inter-chip HSIC interface provided in this embodiment, after the host learns that the peripheral device is in an idle state, the host may suspend the HSIC bus and enter a dormant state. The peripheral enters a dormant state after detecting that the HSIC bus is suspended. After the peripheral device receives an operation instruction of a user, the peripheral device may send a terminal signal to the host through a signal line connected to the host, to wake up the host, thereby implementing HSIC bus-based dormancy and wakeup of the peripheral device and the host and reducing energy consumption of a device.

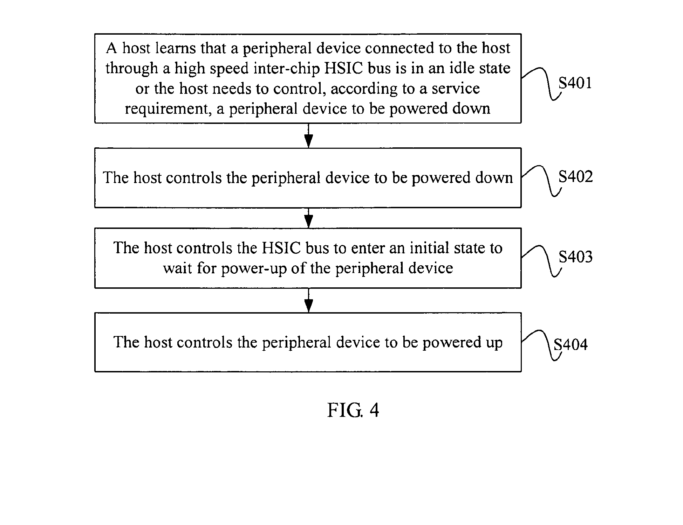

FIG. 4 is a flowchart of a hot swap method based on high speed inter-chip HSIC interface provided in an embodiment of the present invention. As shown in FIG. 4, the method includes:

S401. A host learns that a peripheral device connected to the host through a high speed inter-chip HSIC bus is in an idle state or a host needs to control, according to a service requirement, a peripheral device to be powered down.

S402. The host controls the peripheral device to be powered down.

S403. The host controls the HSIC bus to enter an initial state to wait for power-up of the peripheral device.

S404. The host controls the peripheral device to be powered up.

The host and the peripheral device involved in this embodiment may be connected through an HSIC bus.

where the peripheral device is in the idle state may refer to a scenario where the peripheral device is not used by a user and is waiting for the user or a scenario where the usage rate of the peripheral device is lower than a specific threshold. The host may learn that the peripheral device is in the idle state by direct detection; or, when the peripheral device is in the idle state, a message indicating that the peripheral device is in the idle state may be reported to the host.

In this embodiment, the peripheral device may have an independent power module, or, the peripheral device may have an independent power line. When the host learns that the peripheral device is in an idle state or when the host needs to control, according to the service requirement, the peripheral device to be powered down, for example, in an implementation scenario where the host learns, in a communication process between the hose and the peripheral device, that the peripheral device has an exception, the host may control the peripheral device to be powered down. For example, the host may control the power module of the peripheral device to stop supplying power to the peripheral device, or the host may break the power line of the peripheral device to power down the peripheral device.

After the host controls the peripheral device to be powered down, the host may control the HSIC bus to enter an initial state to wait for power-up of the peripheral device. The HSIC bus that enters the initial state can identify the peripheral device when the peripheral device is powered up and connected for the next time, so as to ensure normal communication between the host and the peripheral device. That the host controls the HSIC bus to enter the initial state may specifically be that the host controls an HSIC controller to be reinitialized so that the HSIC bus enters the initial state.

As a feasible implementation manner, after the host controls the HSIC bus to enter the initial state, the host may save the current state of the HSIC controller and then enter the dormant state, to reduce the power consumption of the host. In the implementation scenario, after the host wakeup, the host may resume the state of an HSIC register according to a saved state of the HSIC register and then control the peripheral device to be powered up.

As another feasible implementation manner, after the host controls the HSIC bus to enter the initial state, the host may save the current state of the HSIC controller and control the HSIC bus to be powered down. Then, the host may enter the dormant state to reduce the power consumption of the host. In the implementation scenario, after the host is woken up, the host may control the HSIC bus to be powered up, then, the host resumes the state of the HSIC register according to the saved state of the HSIC register, and then controls the peripheral device to be powered up.

According to the hot swap method based on high speed inter-chip HSIC interface provided in this embodiment, when the host learns that the peripheral device connected to the host through an HSIC bus is in an idle state or when the host needs to control, according to a service requirement, the peripheral device to be powered down, the host may control the peripheral device to be powered down, thereby implementing the hot swap of the peripheral device and saving electric energy of a device.

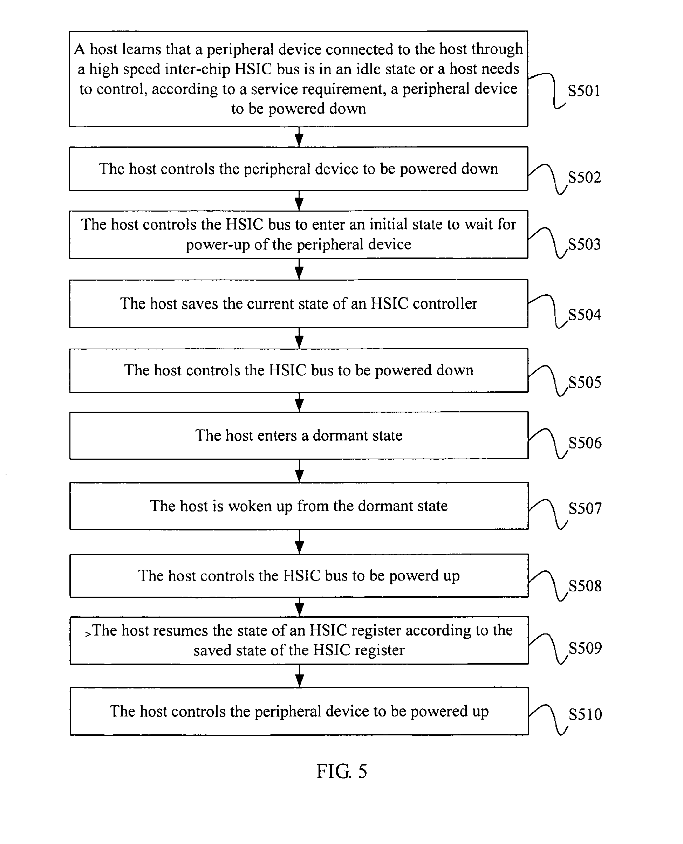

FIG. 5 is a flowchart of a hot swap method based on high speed inter-chip HSIC interface provided in still another embodiment of the present invention. As shown in FIG. 5, this embodiment provides an implementation scenario where hot swap is implemented for a host and a peripheral device based on an HSIC bus. The method includes:

S501. A host learns that a peripheral device connected to the host through a high speed inter-chip HSIC bus is in an idle state, or a host needs to control, according to a service requirement, a peripheral device to be powered down.

S502. The host controls the peripheral device to be powered down.

5503. The host controls the HSIC bus to enter an initial state to wait for power-up of the peripheral device.

S504. The host saves the current state of an HSIC controller.

S505. The host controls the HSIC bus to be powered down.

S506. The host enters a dormant state.

S507. The host is woken up from the dormant state.

S508. The host controls the HSIC bus to be powered up.

S509. The host resumes the state of an HSIC register according to the saved state of the HSIC register.

S510. The host controls the peripheral device to be powered up.

In a scenario where the peripheral device needs to be used again, the host may control the peripheral device to be powered up. After the peripheral device is powered up, the HSIC bus can detect a connection of the peripheral device and can enumerate the peripheral device normally. In this way, the hot swap of an HSIC interface is implemented.

According to the hot swap method based on high speed inter-chip HSIC interface provided in this embodiment, the host may control the peripheral device to be powered down in a scenario where the peripheral device is in an idle state or the host may control the peripheral device to be powered down according to a service requirement, so as to save electric energy. The host may also control the HSIC bus to enter the initial state so that the HSIC bus can identify the peripheral device after the peripheral device is powered up. Therefore, an HSIC interface supports hot swapping, and electric energy of a device is saved.

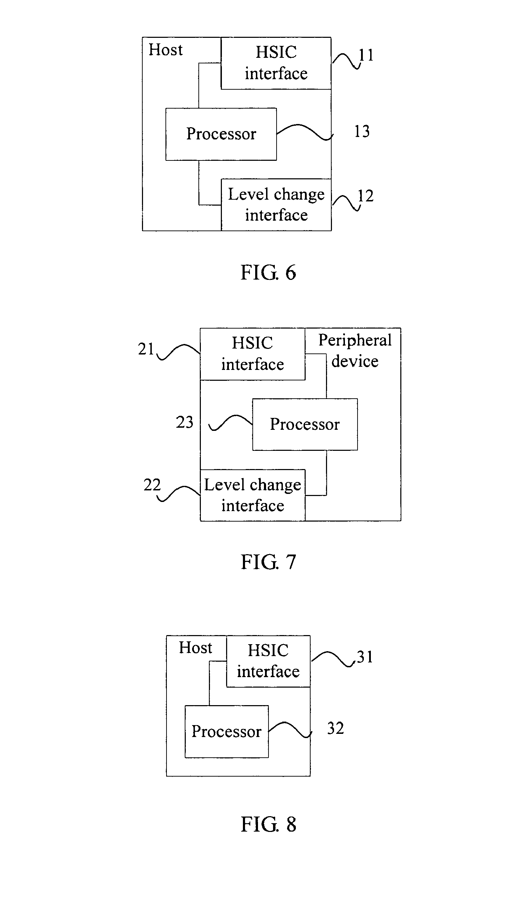

FIG. 6 is a schematic structure diagram of a host provided in an embodiment of the present invention. As shown in FIG. 6, the host includes: an HSIC interface 11, a level change interface 12, and a processor 13.

The high speed inter-chip HSIC interface 11 is connected to a peripheral device through an HSIC bus.

The level change interface 12 is connected to the peripheral device through a signal line and configured to receive an interrupt signal sent by the peripheral device.

The processor 13 is configured to: when learning that the peripheral device is in an idle state, control the host to enter a dormant state; and when the level change interface receives, from the signal line, the interrupt signal sent by the peripheral device, control, according to the interrupt signal, the host to wake up from the dormant state.

Optionally, the processor 13 may be further configured to: after learning that the peripheral device is in an idle state, control the peripheral device to enter a dormant state.

Further or optionally, before the host is in a dormant state, the processor 13 is further configured to suspend the HSIC bus so that the HSIC bus stops data transmission.

Further or optionally, after the processor 13 suspends the HSIC bus, the processor 13 may further be configured to save the current state of an HSIC controller and control the HSIC bus to be powered down.

Further or optionally, after the processor 13 controls, according to the interrupt signal, the host to wake up from the dormant state, the processor 13 is further configured to control the HSIC bus to be powered up, and resume the state of the HSIC controller according to the saved state of the HSIC controller.

Further or optionally, after the processor 13 resumes the state of the HSIC controller according to the saved state of the HSIC controller, the processor 13 is further configured to resume the HSIC bus from a suspended state to a normal working state, so that the HSIC bus resumes data transmission and the peripheral device is woken up from the dormant state.

The host provided in the embodiment of the present invention corresponds to the wakeup method based on high speed inter-chip HSIC interface provided in the embodiment of the present invention and is a device performing the wakeup method based on high speed inter-chip HSIC interface. For the process that the host executes the wakeup method based on high speed inter-chip HSIC interface, reference may be made to related description in the embodiments shown in FIG. 1 and FIG. 3 of the present invention, and details are not further described here.

When the host provided in this embodiment learns that a peripheral device connected to the host through an HSIC bus is in an idle state, the host in a dormant state may be woken up from the dormant state according to an interrupt signal after receiving, from a signal line connected to the peripheral device, the interrupt signal sent by the peripheral device. In this way, HSIC bus-based wakeup of the host and the peripheral device is implemented, and electric energy of the device is saved.

FIG. 7 is a schematic structure diagram of a peripheral device provided in an embodiment of the present invention. As shown in FIG. 7, the peripheral device includes: an HSIC interface 21, a level change interface 22, and a processor 23.

The high speed inter-chip HSIC interface 21 is connected to a host through an HSIC bus.

The level change interface 22 is connected to the host through a signal line and generates an interrupt signal under control of the processor and sends the interrupt signal to the peripheral device through the signal line.

The processor 23 is configured to receive an operation instruction of a user and control the level change interface to generate the interrupt signal.

Optionally, the processor 22 is further configured to: when the peripheral device is in an idle state, control the peripheral device to enter a dormant state under control of the host; or, when the peripheral device is in an idle state, detect that the HSIC bus is suspended and control the peripheral device to enter a dormant state.

Further or optionally, after the peripheral device enters the dormant state, the processor 23 is further configured to control the peripheral device to wake up from the dormant state after the HSIC bus is resumed from the suspended state to a normal working state.

The peripheral device provided in the embodiment of the present invention corresponds to the wakeup method based on high speed inter-chip HSIC interface provided in the embodiment of the present invention and is a device performing the wakeup method based on high speed inter-chip HSIC interface. For the process that the peripheral device executes the wakeup method based on high speed inter-chip HSIC interface, reference may be made to related description in the embodiments shown in FIG. 2 and FIG. 3 of the present invention, and details are not further described here.

The peripheral device provided in this embodiment is connected to the host through the high speed inter-chip HSIC bus, and when receiving the operation instruction of a user, the peripheral device sends the interrupt signal to the host through the signal line connected to the host, to wake up the host from the dormant state. In this way, HSIC bus-based wakeup of the host and the peripheral device is implemented, and electric energy of the peripheral device is saved.

FIG. 8 is a schematic structure diagram of a host provided in another embodiment of the present invention. As shown in FIG. 8, the host includes: an HSIC interface 31 and a processor 32.

The high speed inter-chip HSIC interface 31 is connected to a peripheral device through an HSIC bus.

The processor 32 is configured to: when learning that the peripheral device is in an idle state or needing to control, according to a service requirement, the peripheral device to be powered down, control the peripheral device to be powered down; control the HSIC bus to enter an initial state to wait for power-up of the peripheral device; and control the peripheral device to be powered up.

Optionally, the controlling, by the processor 32, the HSIC bus to enter the initial state may specifically be: controlling an HSIC controller to be reinitialized.

Further or optionally, after the processor 32 controls the HSIC bus to enter the initial state and before the host enters a dormant state, the processor is further configured to save the current state of the HSIC controller and control the HSIC bus to be powered down.

Further or optionally, after the host wakeup and before the processor controls the peripheral device to be powered up, the processor 32 is further configured to control the HSIC bus to be powered up and resume the state of an HSIC register according to the saved state of the HSIC register.

The host provided in the embodiment of the present invention corresponds to the hot swap method based on high speed inter-chip HSIC interface provided in the embodiment of the present invention and is a device performing the hot swap method based on high speed inter-chip HSIC interface. For the process that the host performs the hot swap method based on high speed inter-chip HSIC interface, reference may be made to related description in the embodiments shown in FIG. 4 and FIG. 5 of the present invention, and details are not further described here.

The host provided in this embodiment may control the peripheral device to be powered down when the host learns that the peripheral device connected to the host through an HSIC bus is in an idle state or when the host needs to control, according to a service requirement, the peripheral device to be powered down, thereby implementing the hot swap of the peripheral device and saving electric energy of a device.

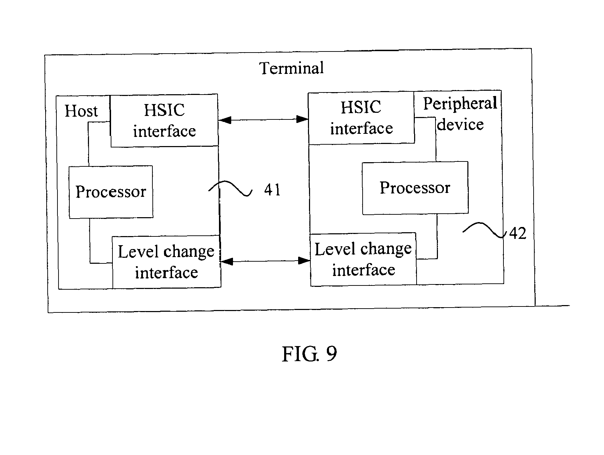

FIG. 9 is a schematic structure diagram of a wireless terminal provided in an embodiment of the present invention. As shown in FIG. 9, the terminal may include a host 41 and a peripheral device 42.

The host and the peripheral device both include a high speed inter-chip HSIC interface, where the HSIC interface of the host and the HSIC interface of the peripheral device are connected through an HSIC bus. The host and the peripheral device both include an interface capable of generating level changes, where the level change interface of the host and the level change interface of the peripheral device are connected through a signal line.

Optionally, the level change interface may be a general purpose input/output GPIO interface or an interrupt interface.

Further or optionally, when the peripheral device is in an idle state, the host may suspend the HSIC bus and enters a dormant state.

Further or optionally, after the host receives, through the signal line, an interrupt signal sent by the peripheral device, the host may be woken up from the dormant state.

Further or optionally, when the peripheral device is in an idle state, the host may control the peripheral device to enter a dormant state; or
the peripheral device detects the state of the HSIC bus, and if the HSIC bus is in a suspended state, the peripheral device may enter the dormant state.

Further or optionally, after the host suspends the HSIC bus, the host may save the current state of an HSIC controller and control the HSIC bus to be powered down.

Further or optionally, after the host is woken up from the dormant state, the host may control the HSIC bus to be powered up, resume the state of the HSIC controller according to the saved state of the HSIC controller, resume the HSIC bus, and wake up the peripheral device.

Further or optionally, when the host detects that the peripheral device connected to the host through the high speed inter-chip HSIC bus is in the idle state, the host may control the peripheral device to be powered down and control the HSIC bus to enter an initial state.

The wireless terminal may be a wireless router, a mobile phone, or a USB modem.

For the specific structures and functions of the host and the peripheral device included in the terminal provided in the embodiment of the present invention, reference may be made to the embodiments of the host and the peripheral device provided in the present invention, and details are not further described here.

According to the terminal provided in the embodiment of the present invention, when the host learns that the peripheral device connected to the host through an HSIC bus is in an idle state, the host in a dormant state may be woken up from the dormant state according to an interrupt signal after receiving, from a signal line connected to the peripheral device, the interrupt signal sent by the peripheral device. In this way, HSIC bus-based wakeup of the host and the peripheral device is implemented, and electric energy of a device is saved. When learning that the peripheral device connected to the host through the HSIC bus is in an idle state or needing to control, according to a service requirement, the peripheral device to be powered down, the host may control the peripheral device to be powered down, thereby implementing the hot swap of the peripheral device and saving electric energy of a device.

It should be noted that the host and the peripheral device in the foregoing embodiment may both include a High Speed Inter-Chip (abbreviated as HSIC) interface, where the HSIC interface of the host and the HSIC interface of the peripheral device are connected through an HSIC bus. The host and the peripheral device may also both include an interface capable of generating level changes (such as a General Purpose Input Output (abbreviated as GPIO) interface, or an interrupt interface), where the level change interface of the host and the level change interface of the peripheral device may be connected through a signal line.

It may be clearly understood by persons skilled in the art that, for the purpose of convenient and brief description, the division of the foregoing functional modules is only taken as an example for description. In practice, the foregoing functions may be assigned to different functional modules for implementation as required. To be specific, the internal structure of the device is divided into different functional modules to implement all or part of the foregoing functions. For the detailed working process of the foregoing system, device, and units, reference may be made to the corresponding processes in the foregoing method embodiments, and details are not described herein again.

In the embodiments provided in the present application, it should be understood that the disclosed device and method may be implemented in other manners. For example, the described device embodiments are merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections of the device or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in each embodiment of the present invention may be integrated into one processing unit, or each of the units may exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device or the like) or a processor (processor) to perform all or a part of the steps of the method described in each embodiment of the present application. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

It should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the embodiments, or make equivalent replacements to some technical features in the technical solutions thereof, without departing from the idea and scope of the technical solutions of the embodiments of the present invention.

## Claims

1. A wakeup method based on high speed inter-chip, HSIC, interface, comprising:
learning, by a host, that a peripheral device connected to the host through a high speed inter-chip HSIC bus is in an idle state;
staying, by the host, in a dormant state;
receiving, by the host from a signal line connected to the peripheral device, an interrupt signal sent by the peripheral device; and
the host is woken up from the dormant state according to the interrupt signal.

2. The method according to claim 1, after the learning, by a host, that a peripheral device connected to the host through a high speed inter-chip HSIC bus is in an idle state, further comprising:
controlling, by the host, the peripheral device to enter a dormant state.

3. The method according to claim 1 or 2, wherein before the host enters the dormant state, the method further comprises:
suspending, by the host, the HSIC bus so that the HSIC bus stops data transmission.

4. The method according to claim 3, after the suspending, by the host, the HSIC bus, further comprising:
saving, by the host, a current state of an HSIC controller; and
controlling, by the host, the HSIC bus to be powered down.

5. The method according to any one of claims 1-4, after the host is woken up from the dormant state according to the interrupt signal, further comprising:
controlling, by the host, the HSIC bus to be powered up; and
resuming, by the host, a state of the HSIC controller according to the saved state of the HSIC controller.

6. The method according to claim 5, after the resuming, by the host, a state of the HSIC controller according to the saved state of the HSIC controller, further comprising:
resuming, by the host, the HSIC bus from a suspended state to a normal working state so that the HSIC bus resumes data transmission and the peripheral device is woken up from the dormant state.

7. A wakeup method based on high speed inter-chip HSIC interface, comprising:
receiving, by a peripheral device connected to a host through a high speed inter-chip HSIC bus, an operation instruction of a user; and
sending, by the peripheral device, an interrupt signal to the host through a signal line connected to the host so that the host is woken up from a dormant state.

8. The method according to claim 7, before the receiving, by a peripheral device connected to a host through a high speed inter-chip HSIC bus, an operation instruction of a user, further comprising:
staying, by the peripheral device, in an idle state; and
entering, by the peripheral device, a dormant state under control of the host; or detecting, by the peripheral device, that the HSIC bus is suspended and entering, by the peripheral device, a dormant state.

9. The method according to claim 8, after the entering, by the peripheral device, a dormant state, further comprising:
the peripheral device is woken up from the dormant state after the HSIC bus is resumed from a suspended state to a normal working state.

10. A host, comprising:
a high speed inter-chip HSIC interface, connected to a peripheral device through an HSIC bus;
a level change interface, connected to the peripheral device through a signal line and configured to receive an interrupt signal sent by the peripheral device; and
a processor, configured to: when learning that the peripheral device is in an idle state, control the host to enter a dormant state; and when the level change interface receives, from the signal line, the interrupt signal sent by the peripheral device, control, according to the interrupt signal, the host to wake up from the dormant state.

11. The host according to claim 10, wherein the processor is further configured to control the peripheral device to enter a dormant state after learning that the peripheral device is in the idle state.

12. The host according to claim 10 or 11, wherein before the host is in the dormant state, the processor is further configured to suspend the HSIC bus so that the HSIC bus stops data transmission.

13. The host according to claim 12, wherein after the processor suspends the HSIC bus, the processor is further configured to save a current state of an HSIC controller and control the HSIC bus to be powered down.

14. The host according to any one of claims 10-13, wherein after the processor controls, according to the interrupt signal, the host to wake up from the dormant state, the processor is further configured to control the HSIC bus to be powered up, and resume a state of the HSIC controller according to the saved state of the HSIC controller.

15. The host according to claim 14, wherein after the processor resumes the state of the HSIC controller according to the saved state of the HSIC controller, the processor is further configured to resume the HSIC bus from a suspended state to a normal working state so that the HSIC bus resumes data transmission and the peripheral device is woken up from the dormant state.

16. A peripheral device, comprising:
a high speed inter-chip HSIC interface, connected to a host through an HSIC bus;
a level change interface, connected to the host through a signal line and configured to generate an interrupt signal under control of a processor and send the interrupt signal to the peripheral device through the signal line; and
the processor, configured to receive an operation instruction of a user and control the level change interface to generate the interrupt signal.

17. The peripheral device according to claim 16, wherein the processor is further configured to: when the peripheral device is in an idle state, control the peripheral device to enter a dormant state under control of the host; or, when the peripheral device is in an idle state, detect that the HSIC bus is suspended and control the peripheral device to enter a dormant state.

18. The peripheral device according to claim 16 or 17, wherein, after the peripheral device enters the dormant state, the processor is further configured to control the peripheral device to wake up from the dormant state after the HSIC bus is resumed from a suspended state to a normal working state.
